# FASCICULE DE BREVET EUROPEEN

(11) **EP 1 132 230 B1**
(45) Date de publication et mention de la délivrance du brevet: **27.06.2007**
(21) Numéro de dépôt: 01105682.7
(22) Date de dépôt: 07.03.2001
(51) Int. Cl.: B60H 1/32, B60H 1/02, B60H 1/20, B60H 1/00

(54) **Dispositif de chauffage et/ou climatisation de l'habitacle d'un véhicule à moteur**
Heiz- oder Klimaanlage des Fahrgastraumes eines Kraftfahrzeuges
Heating or conditioning installation of a motor vehicle passenger compartment

(30) Priorité: 10.03.2000 FR 0003125
(43) Date de publication de la demande: 12.09.2001
(73) Titulaire: VALEO SYSTEMES THERMIQUES, 78320 Le Mesnil Saint-Denis (FR)
(72) Inventeur: Karl, Stefan, 78580 Bazemont (FR)
(74) Mandataire: Léveillé, Christophe

(56) Documents cités:
- DE-A- 19 806 654
- DE-C- 19 813 674
- FR-A- 2 621 867
- US-A- 5 971 290

## Description

L'invention concerne un dispositif de chauffage et/ou climatisation de l'habitacle d'un véhicule à moteur comportant une boucle de chauffage principal et une boucle de chauffage d'appoint.

Plus particulièrement, elle concerne un tel dispositif comportant une boucle de refroidissement du moteur dans laquelle circule un fluide caloporteur qui prélève de la chaleur sur le moteur et qui la restitue à un aérotherme, une boucle de pompe à chaleur dans laquelle circule un fluide réfrigérant, cette boucle contenant un compresseur, un évaporateur constituant une source froide de la pompe à chaleur à laquelle le fluide réfrigérant prélève de la chaleur sur le milieu extérieur, et un condenseur constituant une source chaude de la pompe à chaleur à laquelle le fluide réfrigérant cède de la chaleur, le condenseur étant intégré à la boucle de refroidissement du moteur en amont de l'aérotherme.

Dans les véhicules à moteur, qu'il s'agisse de véhicules à moteur thermique, électrique ou autres, le chauffage principal de l'habitacle est réalisé au moyen d'une boucle de refroidissement du moteur qui prélève de la chaleur sur le moteur et la transfère à un échangeur de chaleur, appelé aérotherme, balayé par un flux d'air qui est dirigé dans l'habitacle.

Cependant, il peut arriver que ce chauffage se révèle insuffisant, par exemple si la température extérieure est particulièrement basse. Cela se produit, plus particulièrement, lorsque le véhicule est équipé d'un moteur moderne à haut rendement dont les pertes thermiques sont faibles, ce qui ne permet pas d'en extraire une quantité de chaleur suffisante.

C'est pourquoi il est connu d'équiper les véhicules à moteur d'un chauffage complémentaire, qui permet d'apporter un complément de chauffage à l'habitacle dans les situations où le chauffage principal se révèle insuffisant.

On connaît des chaudières de chauffage auxiliaire qui sont intégrées dans le circuit de refroidissement en amont de l'aérotherme. Cela permet d'augmenter la température du liquide de refroidissement du moteur en amont de l'aérotherme, et par suite la température du flux d'air délivré par ce dernier. L'inconvénient d'un tel dispositif est que la température du liquide de refroidissement est également augmentée en amont du moteur. Par conséquent la quantité de chaleur extraite du moteur diminue. Cette diminution doit être compensée par la chaudière, ce qui réduit la quantité de chaleur supplémentaire disponible pour chauffer l'habitacle. Le rendement énergétique d'un tel dispositif est donc peu satisfaisant.

Le document japonais JP 10-76837 (Calsonic), qui est considéré comme l'état de l'art le plus proche, décrit un dispositif de chauffage de l'habitacle d'un véhicule à moteur comportant un circuit de refroidissement auquel est associé un circuit de chauffage complémentaire qui réalise une pompe à chaleur, grâce à laquelle on prélève de la chaleur à une source froide par évaporation d'un fluide dans un évaporateur et on transfère cette chaleur à une source chaude par condensation du même fluide dans un condenseur. Un échangeur de chaleur constituant la source froide de la pompe à chaleur est intégré dans le circuit de refroidissement en amont du moteur, et un échangeur de chaleur constituant la source chaude de la pompe à chaleur est intégré à ce même circuit en amont de l'aérotherme. Le fluide réfrigérant de la boucle de pompe à chaleur cède de la chaleur au fluide caloporteur en amont de l'aérotherme.

Dans un tel dispositif, la température du fluide caloporteur du circuit de refroidissement n'est pas augmentée à l'entrée du moteur. Elle est au contraire abaissée par le prélèvement de chaleur à la source froide de la pompe à chaleur. De la sorte, la quantité de chaleur extraite du moteur n'est pas diminuée, mais augmentée. Le rendement énergétique du chauffage d'appoint est nettement amélioré par rapport à un dispositif tel que celui qui a été précédemment décrit.

Toutefois ce dispositif présente plusieurs inconvénients. D'une part, il ne permet pas le refroidissement de l'habitacle en cas de température extérieure élevée. D'autre part, la chaleur prélevée sur le circuit de refroidissement, en échauffant le fluide réfrigérant de la pompe à chaleur, peut conduire à une pression d'aspiration inadmissible pour le compresseur, ce qui peut mener à sa destruction.

Les documents DE 198 06 654 et FR 2 621 867 décrivent des dispositifs de chauffage et/ou climatisation de l'habitacle d'un véhicule à moteur, comportant une boucle de refroidissement du moteur dans laquelle circule un fluide caloporteur qui prélève de la chaleur sur le moteur et qui la restitue à un aérotherme, une boucle de pompe à chaleur dans laquelle circule un fluide réfrigérant, cette boucle comprenant un compresseur, un évaporateur constituant une source froide de la pompe à chaleur à laquelle le fluide réfrigérant prélève de la chaleur au fluide caloporteur de la boucle de refroidissement du moteur, et un condenseur constituant une source chaude de la pompe à chaleur à laquelle le fluide réfrigérant cède de la chaleur, le condenseur n'étant pas intégré à la boucle de refroidissement du moteur.

Le document DE 198 06 654 décrit un dispositif où le condenseur est balayé par le flux d'air qui est dirigé dans l'habitacle.

Le document FR 2 621 867 décrit un dispositif où le condenseur est intégré à une boucle auxiliaire de fluide caloporteur, séparée de la boucle de refroidissement du moteur, lorsque le dispositif fonctionne en mode pompe à chaleur.

Ces dispositifs comportent également une branche de climatisation contenant un condenseur et un évaporateur, et des moyens de commutation permettant de faire circuler le fluide réfrigérant soit dans la branche de climatisation, soit dans la boucle de pompe à chaleur.

L'invention a notamment pour but de remédier à ces inconvénients. Elle propose un dispositif de chauffage et/ou climatisation qui permet de refroidir l'habitacle en cas de chaleur extérieure élevée. D'autre part, ce dispositif permet de contrôler la pression du fluide de la boucle de pompe à chaleur à l'entrée du compresseur.

Dans ce but, le dispositif de chauffage de l'invention comporte une branche de climatisation contenant un condenseur et un évaporateur, cette boucle ayant une extrémité amont raccordée à la boucle de pompe à chaleur en aval du compresseur, et une extrémité aval raccordée à la boucle de pompe à chaleur en amont du compresseur, et des moyens de commutation permettant de faire circuler le fluide réfrigérant soit dans la boucle de pompe à chaleur, soit dans la branche de pompe à chaleur, de manière à former une boucle de pompe à chaleur.

Ainsi, le dispositif peut fonctionner selon au moins trois modes différents. Dans un premier mode, correspondant à une température extérieure modérée, la boucle de refroidissement du moteur fonctionne seule. Dans un second mode, correspondant à une température extérieure plus rigoureuse ou au démarrage du véhicule, la boucle de refroidissement du moteur et la boucle de pompe à chaleur fonctionnent simultanément. Enfin, dans un troisième mode, correspondant à une température extérieure élevée, seule la boucle de climatisation fonctionne.

Dans un mode de réalisation particulier, l'évaporateur est intégré dans la boucle de refroidissement, en amont du moteur.

Dans un autre mode de réalisation, l'évaporateur prélève de la chaleur sur un milieu extérieur au circuit de refroidissement du moteur.

Selon une disposition importante de l'invention, la boucle de refroidissement comporte des moyens de contrôle, par exemple au moins une vanne, qui permettent de contrôler la quantité de fluide caloporteur qui traverse l'évaporateur.

De même la boucle de refroidissement comporte des moyens de contrôle, par exemple au moins une vanne, qui permettent de contrôler la quantité de fluide caloporteur qui traverse le condenseur.

De préférence la branche de climatisation comporte un accumulateur de fluide réfrigérant. L'évaporateur constitue avantageusement un accumulateur de fluide réfrigérant commun à la boucle de climatisation et à la boucle de pompe à chaleur.

Selon un autre mode de réalisation, le dispositif de chauffage comporte un boîtier modulaire contenant l'évaporateur, les moyens de contrôle de l'évaporateur, le clapet anti-retour, le condenseur, les moyens de contrôle du condenseur, les moyens de commutation, et les moyens de détente de la boucle de pompe à chaleur.

D'autres caractéristiques et avantages de la présente invention apparaîtront encore à la lecture de la description qui suit d'exemples de réalisation donnés à titre illustratif en référence aux figures annexées.

Sur ces figures :
- la figure 1 est une vue schématique d'un dispositif selon un premier mode de réalisation ;
- la figure 2 est une vue schématique d'un dispositif selon une variante du premier mode de réalisation ; et
- la figure 3 représente un second mode de réalisation de l'invention dans lequel le dispositif est contenu dans un boîtier modulaire.

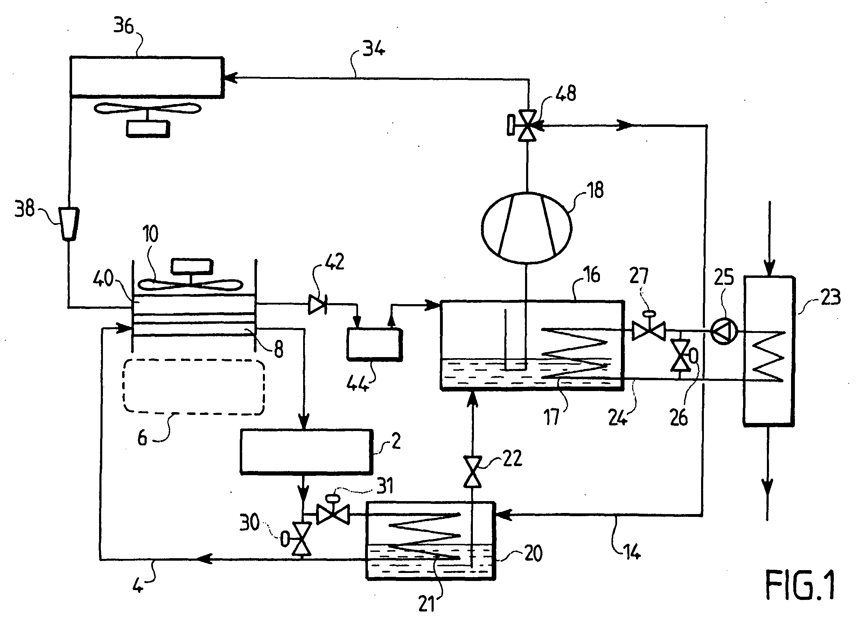

On a représenté sur la figure 1 un premier mode de réalisation de l'invention. Un véhicule à moteur comporte un moteur 2. Dans cet exemple, le moteur 2 est un moteur thermique, mais ce pourrait être également un moteur d'un autre type, comme un moteur électrique. De manière conventionnelle, le moteur 2 est refroidi par une boucle de refroidissement 4 qui permet le chauffage principal de l'habitacle 6 représenté schématiquement en traits pointillés. La boucle de refroidissement 4, dans laquelle circule un fluide réfrigérant (dans l'exemple de l'eau glycolée), contient un radiateur ou aérotherme 8 traversé par un flux d'air soufflé par un pulseur 10. Ce flux d'air s'échauffe en traversant l'aérotherme ce qui permet de chauffer l'habitacle 6.

Etant donné que ce chauffage peut ne pas être suffisant dans certaines circonstances, le dispositif prévoit une seconde boucle, à savoir une boucle de pompe à chaleur 14 qui réalise un chauffage complémentaire de l'eau glycolée de la boucle de refroidissement 4. La boucle de pompe à chaleur 14 comprend successivement un évaporateur 16, un compresseur 18, un condenseur 20 et des moyens de détente 22 intercalés entre le condenseur 20 et l'évaporateur 16. L'évaporateur 16 constitue une source froide à laquelle la boucle de pompe à chaleur prélève de la chaleur sur le milieu extérieur.

Afin d'améliorer le rendement thermique de la pompe à chaleur, il est souhaitable que cet échange se fasse à une température aussi élevée que possible. Dans l'exemple de réalisation représenté, l'évaporateur 16 intègre un échangeur de chaleur 17 entre le fluide réfrigérant du circuit de la boucle 14 et un fluide caloporteur qui s'échauffe au contact d'une source extérieure 23 telle que le pot d'échappement ou le circuit d'huile du moteur.

Ce fluide circule dans une boucle 24 sous l'action d'une pompe 25. Une vanne 26 montée en dérivation sur la boucle 24, et plus particulièrement sur l'échangeur de chaleur 17, permet de réguler la quantité de fluide qui traverse l'évaporateur 16. La vanne 26 peut être notamment une vanne régulée ou une vanne thermostatique. En outre une vanne 27 est placée entre la vanne 26 et l'échangeur de chaleur 17. Cette vanne permet de couper complètement la circulation du fluide dans l'échangeur de chaleur 17 de l'évaporateur 16. La vanne 27 est ouverte lorsque la vanne 26 est fermée, et vice versa. En variante, les vannes 26 et 27 pourraient être rassemblées en une vanne à trois voies.

Le compresseur 18 peut être un compresseur à cylindrée variable dont le contrôle de la cylindrée se fait de manière interne ou externe.

Le condenseur 20 constitue la source chaude de la pompe à chaleur. Il intègre un échangeur de chaleur 21 avec l'eau glycolée de la boucle de refroidissement 4 du moteur. Le condenseur 20 est monté juste en amont de l'aérotherme 8. L'eau du circuit de refroidissement 4 est échauffée par son passage dans le condenseur 20. Elle pénètre donc dans l'aérotherme à une température plus élevée, ce qui permet d'augmenter la température du flux d'air soufflé dans l'habitacle 6 et donc d'apporter un chauffage complémentaire en cas de besoin.

De la même manière que pour l'évaporateur 16, une vanne 30 est montée en dérivation de la boucle 4 aux bornes du condenseur 20, donc de l'échangeur de chaleur 21, afin de réguler la quantité de fluide caloporteur qui traverse le condenseur. Comme la vanne 26, la vanne 30 peut être notamment une vanne régulée ou une vanne thermostatique.

En outre une vanne 31 est placée entre la vanne 30 et l'échangeur de chaleur 21. Cette vanne permet de couper complètement la circulation du fluide dans l'échangeur de chaleur 21 du condenseur 20. La vanne 31 est ouverte lorsque la vanne 30 est fermée, et vice versa. En variante, les vannes 30 et 31 pourraient être rassemblées en une vanne à trois voies.

Le niveau de la pression d'aspiration du compresseur 18 est très important pour le fonctionnement de la pompe à chaleur. Si l'on apporte une quantité de chaleur trop importante à l'évaporateur 16, la pression d'aspiration du compresseur 18 augmentera, ce qui pourra conduire à un fonctionnement à un niveau de pression incompatible avec les caractéristiques de résistance du compresseur. Le dispositif de l'invention permet de réguler la pression d'aspiration du compresseur 18 par le contrôle de la fraction du fluide qui circule respectivement dans l'évaporateur 16 et dans la dérivation contrôlée par la vanne 26. En faisant passer une faible quantité de fluide dans l'évaporateur, on diminue l'apport de chaleur et, par conséquent, la pression d'aspiration du compresseur. Inversement, en faisant passer une grande quantité de fluide dans l'évaporateur, on augmente l'apport de chaleur et, par conséquent, la pression d'aspiration du compresseur 18. Le dispositif de l'invention fournit donc un moyen simple et efficace pour réguler la pression d'aspiration du compresseur.

De même, si la puissance de chauffage de la pompe à chaleur est trop élevée, on diminue le débit de fluide qui circule dans l'évaporateur 16 en ouvrant davantage la vanne 26 jusqu'à ce que la pression d'aspiration du compresseur atteigne le niveau à partir duquel ce dernier commence à réduire sa cylindrée de lui-même (contrôle interne) ou à partir duquel la cylindrée peut être contrôlée de l'extérieur (contrôle externe).

La vanne 30 permet d'améliorer l'amorçage de la pompe à chaleur à bas niveau de température de l'eau de la boucle de refroidissement 4. En ouvrant la vanne 30, on réduit le débit d'eau dans l'échangeur eau-réfrigérant à haute pression, constituant le condenseur 20. L'évacuation de chaleur étant réduite à la source chaude, la température de cette dernière augmente et la condensation du réfrigérant s'effectue à une pression plus élevée, ce qui charge davantage le compresseur 18. Le moteur 2 doit alors fournir un effort plus important, ce qui permet d'injecter plus de calories dans le circuit à eau.

Enfin, le dispositif de chauffage et/ou climatisation de l'invention comporte une branche de climatisation 34. Cette branche contient un condenseur 36, des moyens de détente 38, un évaporateur 40, un clapet anti-retour 42 et un accumulateur de fluide réfrigérant 44. A son extrémité amont, la branche 34 est raccordée à la boucle de pompe à chaleur 14 en aval du compresseur 18. A son extrémité aval, la branche 34 est raccordée à la boucle de pompe à chaleur en amont du compresseur 18 et plus particulièrement à l'échangeur 16. Le même fluide réfrigérant circule dans le circuit de pompe à chaleur et dans la branche 34. Des moyens de commutation, par exemple une vanne à trois voies 48, permettent de faire circuler le fluide réfrigérant soit dans la boucle 14, soit dans la branche 34. On réalise ainsi deux boucles, à savoir une boucle de pompe à chaleur et une boucle de climatisation, qui possèdent une partie commune dans laquelle on trouve en particulier un compresseur commun.

Le dispositif peut ainsi fonctionner selon au moins trois modes différents.

Dans un premier mode de fonctionnement, la boucle de refroidissement 4 suffit à assurer le chauffage de l'habitacle 6. Dans ce cas la vanne 30 est complètement ouverte de telle sorte que la totalité de l'eau glycolée circule exclusivement entre le moteur 2 et l'aérotherme 8.

Dans un second mode de fonctionnement, la boucle de refroidissement et la boucle de pompe à chaleur 14 fonctionnent simultanément. La vanne à trois voies 48 est commandée de manière à ce que le fluide réfrigérant circule dans la boucle de pompe à chaleur. Les vannes 26 et 30 sont totalement ou partiellement fermées. Le fluide réfrigérant du circuit de pompe à chaleur prélève de la chaleur sur le milieu extérieur, par exemple sur le pot d'échappement 22. Cette chaleur, augmentée de l'énergie mécanique de compression du fluide, est cédée à l'eau glycolée du circuit de refroidissement au niveau du condenseur 20. L'eau glycolée entre donc dans l'aérotherme à une température plus élevée, ce qui permet d'augmenter la température du flux d'air soufflé dans l'habitacle 6 et donc d'apporter un chauffage d'appoint.

Dans un troisième mode de fonctionnement, correspondant à une température extérieure élevée, il n'est pas nécessaire de chauffer l'habitacle, mais au contraire de le refroidir. Dans ce troisième mode de fonctionnement, seule la boucle de climatisation fonctionne. La vanne à trois voies 48 est commandée de manière à ce que le fluide réfrigérant circule dans la boucle de climatisation. Les vannes 26 et 30 sont ouvertes. Ainsi, la boucle de climatisation permet d'envoyer de manière classique dans l'habitacle 6 un flux d'air mis en mouvement par le pulseur 10, qui est commun à la branche 34 et à la branche 4, et refroidi par son passage au travers de l'évaporateur 40.

Optionnellement, la vanne 30 peut être fermée et la vanne 31 ouverte. La circulation de l'eau dans l'échangeur 21 du condenseur 20 n'a pas d'impact sur les performances et permet de chasser le fluide réfrigérant et de pousser ce dernier vers la boucle de climatisation.

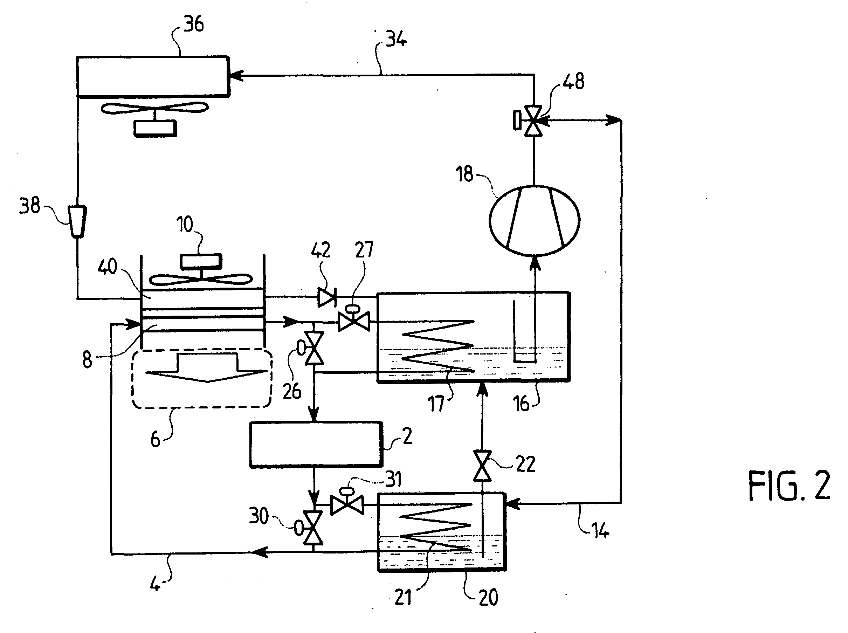

On a représenté sur la figure 2 une variante de réalisation du dispositif de la figure 1. Cette variante se distingue par le fait que la source froide de la pompe à chaleur, à savoir l'évaporateur 16, prélève de la chaleur sur la boucle de refroidissement 4 du moteur 2. A cette fin, la boucle 4 traverse l'évaporateur 16 de manière à constituer un échangeur de chaleur à basse pression entre le fluide de la boucle 4 et le fluide réfrigérant de la boucle de pompe à chaleur 14. Une vanne 26 est montée en dérivation aux bornes de l'évaporateur 16, et il est prévu aussi une vanne 27 analogue à celle de la figure 1. Dans le mode de réalisation de la figure 1, la température de l'eau est augmentée à la sortie de l'aérotherme et par conséquent à l'entrée du moteur. Cela conduit à une diminution de la quantité de chaleur extraite du moteur.

En intégrant l'évaporateur à la boucle de refroidissement du moteur, en aval de l'aérotherme 8, l'eau du circuit de refroidissement est refroidie avant de pénétrer dans le moteur, ce qui permet d'augmenter la quantité de chaleur extraite du moteur. Une autre différence est constituée par le fait que l'accumulateur, séparé dans le mode de réalisation de la figure 1, est intégré à l'évaporateur 16. On constitue ainsi une réserve de fluide réfrigérant commune à la boucle de pompe à chaleur et à la boucle de climatisation. Le fonctionnement des vannes 26 et 27, ainsi que celui des vannes 30 et 31 est identique à ce qui a été décrit en référence à la figure 1. La vanne 26 permet la régulation de la pression d'aspiration du compresseur 18, ainsi que la régulation de la puissance de la pompe à chaleur. La vanne 30 permet de faciliter l'amorçage de la pompe à chaleur à très basse température. De même que dans la forme de réalisation de la figure 1, les vannes 27 et 31 sont ouvertes lorsque les vannes 26 et 30 sont fermées, et vice versa.

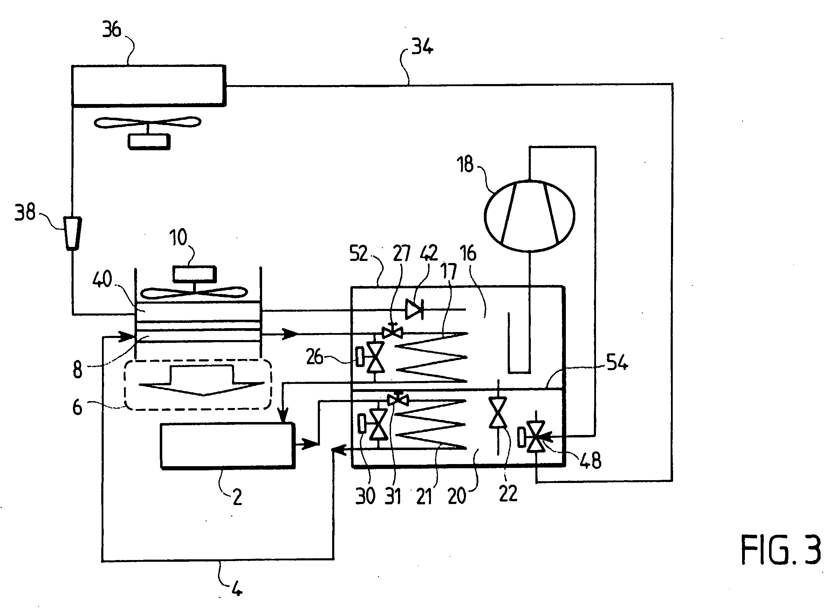

On a représenté sur la figure 3 un second mode de réalisation de l'invention qui comprend un boîtier modulaire 52. Le volume intérieur au boîtier 52 est séparé en deux par une cloison interne 54 qui détermine deux chambres, à savoir respectivement une chambre 16 qui joue le rôle d'évaporateur et une chambre 20 qui joue le rôle de condenseur. Après l'aérotherme 8, la boucle de refroidissement 4 traverse la chambre 16 avant de revenir vers le moteur. A la sortie du moteur, la boucle 4 traverse la chambre de condenseur 20. Les vannes 26 et 27 sont logées à l'intérieur de la chambre 16 et les vannes 30 et 31 à l'intérieur de la chambre 20. Le clapet anti-retour 42 est contenu dans la chambre 16 et la vanne trois voies 48 dans la chambre 20. Lorsqu'il passe du condenseur à l'évaporateur, le fluide réfrigérant de la boucle de pompe à chaleur traverse des moyens de détente 22 intégrés dans l'une ou l'autre des deux chambres.

Le boîtier modulaire 52 constitue un ensemble qui contient tous les éléments nécessaires à la réalisation du circuit de chauffage d'appoint. Pour l'implanter, il suffit de prévoir les connexions nécessaires. Les autres éléments du dispositif de chauffage, en particulier le condenseur et l'évaporateur du circuit de climatisation, ainsi que l'aérotherme, sont classiques. Ils ne nécessitent par conséquent aucune modification.

## Revendications

1. Dispositif de chauffage et/ou climatisation de l'habitacle d'un véhicule à moteur, comportant une boucle de refroidissement du moteur (4) dans laquelle circule un fluide caloporteur qui prélève de la chaleur sur le moteur (2) et qui la restitue à un aérotherme (8); une boucle de pompe à chaleur dans laquelle circule un fluide réfrigérant, cette boucle contenant un compresseur (18), un évaporateur (16) constituant une source froide de la pompe à chaleur à laquelle le fluide réfrigérant prélève de la chaleur sur le milieu extérieur, et un condenseur (20) constituant une source chaude de la pompe à chaleur à laquelle le fluide réfrigérant cède de la chaleur, le condenseur (20) étant intégré à la boucle de refroidissement du moteur (2) en amont de l'aérotherme,
**caractérisé en qu'**il comporte une branche de climatisation contenant un condenseur (36) et un évaporateur (40), cette branche ayant une extrémité amont raccordée à la boucle de pompe à chaleur (14) en aval du compresseur (18), et une extrémité aval raccordée à la boucle de pompe à chaleur (14) en amont du compresseur (18); et des moyens de commutation (48) permettant de faire circuler le fluide réfrigérant soit dans la branche de climatisation, soit dans la boucle de pompe à chaleur, de manière à former une boucle de pompe à chaleur (14).

2. Dispositif selon la revendication 1, **caractérisé en ce que** l'évaporateur (16) de la boucle de pompe à chaleur (14) est intégré dans la boucle de refroidissement, en amont du moteur (2).

3. Dispositif selon la revendication 1, **caractérisé en ce que** l'évaporateur (16) prélève de la chaleur sur un milieu extérieur au circuit de refroidissement du moteur (2).

4. Dispositif selon l'une des revendications 1 à 3, **caractérisé en ce que** la boucle de refroidissement comporte des moyens de contrôle (26, 27) qui permettent de contrôler la quantité de fluide caloporteur qui traverse l'évaporateur (16).

5. Dispositif selon la revendication 4, **caractérisé en ce que** les moyens de contrôle qui permettent de contrôler la quantité de fluide caloporteur qui traverse l'évaporateur (16) sont constitués par au moins une vanne (26, 27).

6. Dispositif selon l'une des revendications 1 à 5, **caractérisé en ce que** la boucle de refroidissement comporte des moyens de contrôle (30, 31) qui permettent de contrôler la quantité de fluide caloporteur qui traverse le condenseur (20).

7. Dispositif selon la revendication 6, **caractérisé en ce que** les moyens de contrôle qui permettent de contrôler la quantité de fluide caloporteur qui traverse le condenseur (20) sont constitués par au moins une vanne (30, 31).

8. Dispositif selon l'une des revendications 1 à 7, **caractérisé en ce que** la branche de climatisation comporte un accumulateur de fluide réfrigérant (44).

9. Dispositif selon la revendication 8, **caractérisé en ce que** l'évaporateur (16) constitue un accumulateur de fluide réfrigérant commun à la boucle de climatisation et à la boucle de pompe à chaleur (14).

10. Dispositif selon l'une des revendications 1 à 9, **caractérisé en ce que** la branche de climatisation comporte un clapet anti-retour (42).

11. Dispositif selon l'une des revendications 1 à 10, **caractérisé en ce que** la boucle de pompe à chaleur (14) comporte des moyens de détente (22) pour détendre le fluide réfrigérant entre le condenseur (20) et l'évaporateur (16).

12. Dispositif selon l'une des revendications 1 à 11, **caractérisé en ce qu'**il comporte un boîtier modulaire contenant l'évaporateur (16), des moyens de contrôle de l'évaporateur, le clapet anti-retour, le condenseur (20), les moyens de contrôle du condenseur (20), les moyens de commutation, et les moyens de détente de la boucle de pompe à chaleur (14).

13. Dispositif selon l'une des revendications 1 à 12, **caractérisé en ce que** le moteur (2) est un moteur thermique ou un moteur électrique.

## Claims

1. Heating and/or air conditioning device for the car interior of a motor vehicle, comprising a cooling loop for the engine (4) in which a heat transfer fluid circulates, which extracts heat from the engine (2) and which restores it to a unit heater (8); a heat pump loop in which a refrigerant fluid circulates, this loop containing a compressor (18), an evaporator (16) consisting of a cold source for the heat pump at which the refrigerant fluid extracts heat from the outside environment, and a condenser (20) consisting of a hot source for the heat pump at which the refrigerant fluid releases heat, the condenser (2) being integrated with the cooling loop for the engine (2) upstream from the unit heater, **characterised in that** it comprises an air conditioning branch (36) and an evaporator (40), this branch having an upstream end connected to the heat pump loop (14) downstream from the compressor (18), and a downstream end connected to the heat pump loop (14) upstream from the compressor (18); and switching means (48) making it possible to circulate the refrigerant fluid either in the air conditioning branch or in the heat pump loop, so as to form a heat pump loop (14).

2. Device of claim 1, **characterised in that** the evaporator (16) of the heat pump loop (14) is integrated into the cooling loop, upstream from the engine (2).

3. Device of claim 1, **characterised in that** the evaporator (16) extracts heat from an environment outside of the engine-cooling circuit (2).

4. Device as claimed in one of claims 1 to 3, **characterised in that** the cooling loop comprises control means (26, 27) which make it possible to control the amount of heat transfer fluid that passes through the evaporator (16).

5. Device of claim 4, **characterised in that** the control means that make it possible to control the amount of heat transfer fluid that passes through the evaporator (16) consist of at least one valve (26, 27).

6. Device as claimed in one of claims 1 to 5, **characterised in that** the cooling loop comprises control means (30, 31) that make it possible to control the amount of heat transfer fluid that passes through the condenser (20).

7. Device of claim 6, **characterised in that** the control means that make it possible to control the amount of heat transfer fluid that passes through the condenser (20) consist of at least one valve (30, 31).

8. Device as claimed in one of claims 1 to 7, **characterised in that** the air conditioning branch comprises a refrigerant fluid accumulator (44).

9. Device of claim 8, **characterised in that** the evaporator (16) constitutes a refrigerant fluid accumulator common to the air conditioning loop and to the heat pump loop (14).

10. Device as claimed in one of claims 1 to 9, **characterised in that** the air conditioning branch comprises a check valve (42).

11. Device as claimed in one of claims 1 to 10, **characterised in that** the heat pump loop (14) comprises pressure-reducing means (22) for reducing the pressure of the refrigerant fluid between the condenser (20) and the evaporator (16).

12. Device as claimed in one of claims 1 to 11, **characterised in that** it comprises a modular casing containing the evaporator (16), control means for the evaporator, the check valve, the condenser (20), the control means for the condenser (20), the switching means, and the pressure-reducing means for the heat pump loop (14).

13. Device as claimed in one of claims 1 to 12, **characterised in that** the engine (2) is a heat engine or an electric motor.

## Patentansprüche

1. Heiz- und/oder Klimatisiervorrichtung für das Karosseriegehäuse eines Kraftfahrzeugs mit einem Motorkühlkreislauf (4), in der ein Wärmeträger fließt, der dem Motor (2) Wärme entzieht und diese einem Luftheizgerät zuführt, sowie mit einem Wärmepumpenkreislauf, in dem ein Kältemittel fließt und der einen Verdichter (18), einen Verdampfer (16), der eine Kältequelle für die Wärmepumpe bildet, in deren Außenbereich das Kältemittel Wärme entzieht, und einen Verflüssige (20) besitzt, der eine Wärmequelle für die Wärmepumpe bildet, an die das Kältemittel Wärme abgibt, wobei der Verflüssiger (20) vor dem Luftheizgerät in den Kühlkreislauf des Motors (2) eingebaut ist,
**dadurch gekennzeichnet, dass** sie einen Klimakreislauf besitzt, der einen Verdichter (36) und einen Verdampfer (40) enthält, wobei der Klimakreislauf ein hinter dem Verdichter (18) am Wärmepumpenkreislauf (14) angeschlossenes vorderes Ende und ein vor dem Verdichter (18) am Wärmepumpenkreislauf (14) angeschlossenes hinteres Ende sowie Umschaltmittel (48) besitzt, mit denen das Kältemittel entweder in den Klimakreislauf oder in den Wärmepumpenkreislauf geleitet werden kann, um einen Wärmepumpenkreislauf (14) zu bilden.

2. Vorrichtung nach Patentanspruch 1, **dadurch gekennzeichnet, dass** der Verdampfer (16) des Wärmepumpenkreislaufs (14) vor dem Motor (2) in den Kühlkreislauf eingebaut ist.

3. Vorrichtung nach Patentanspruch 1, **dadurch gekennzeichnet, dass** der Verdampfer (16) in einem Bereich außerhalb des Kühlkreislaufs des Motors (2) Wärme entzieht.

4. Vorrichtung nach Patentanspruch 1 bis 3, **dadurch gekennzeichnet, dass** der Kühlkreislauf Regelvorrichtungen (26, 27) besitzt, mit denen die durch den Verdampfer (16) fließende Wärmeträgermenge geregelt werden kann.

5. Vorrichtung nach Patentanspruch 4, **dadurch gekennzeichnet, dass** die Regelvorrichtungen, mit denen die durch den Verdampfer (16) fließende Wärmeträgermenge geregelt werden kann, aus mindestens einem Ventil (26, 27) bestehen.

6. Vorrichtung nach Patentanspruch 1 bis 5, **dadurch gekennzeichnet, dass** der Kühlkreislauf Regelvorrichtungen (30, 31) besitzt, mit denen die durch den Verdichter (20) fließende Wärmeträgermenge geregelt werden kann.

7. Vorrichtung nach Patentanspruch 6, **dadurch gekennzeichnet, dass** die Regelvorrichtungen, mit denen die durch den Verdichter (20) fließende Wärmeträgermenge geregelt werden kann, aus mindestens einem Ventil (30, 31) bestehen.

8. Vorrichtung nach Patentanspruch 1 bis 7, **dadurch gekennzeichnet, dass** der Klimakreislauf einen Kältemittelbehälter (44) besitzt.

9. Vorrichtung nach Patentanspruch 8, **dadurch gekennzeichnet, dass** der Verdampfer (16) einen gemeinsamen Kältemittelbehälter für den Klimakreislauf und den Wärmepumpenkreislauf (14) bildet.

10. Vorrichtung nach Patentanspruch 1 bis 9, **dadurch gekennzeichnet, dass** der Klimakreislauf ein Rückschlagventil (42) besitzt.

11. Vorrichtung nach Patentanspruch 1 bis 10, **dadurch gekennzeichnet, dass** der Wärmepumpenkreislauf (14) Entspannmittel (22) zum Entspannen des Kältemittels zwischen dem Verdichter (20) und dem Verdampfer (16) besitzt.

12. Vorrichtung nach Patentanspruch 1 bis 11, **dadurch gekennzeichnet, dass** sie ein modulares Gehäuse besitzt, das den Verdampfer (16), Vorrichtungen zur Regelung des Verdampfers, das Rückschlagventil, den Verdichter (20), Vorrichtungen zur Regelung des Verdichters (20), Umschaltmittel und Mittel zum Entspannen des Wärmepumpenkreislaufs enthält.

13. Vorrichtung nach Patentanspruch 1 bis 12, **dadurch gekennzeichnet, dass** der Motor ein Wärmemotor oder ein elektrischer Motor ist.
